# EUROPÄISCHE PATENTANMELDUNG

(11) **EP 4 163 039 A1**
(43) Veröffentlichungstag der Anmeldung: **12.04.2023**
(21) Anmeldenummer: 21201904.6
(22) Anmeldetag: 11.10.2021
(51) Int. Cl.: B23B 51/04, B28D 1/04

(54) **BOHRKRONE MIT VERBESSERTER ENTFERNUNG DES BOHRKERNS**

(71) Anmelder: Hilti Aktiengesellschaft, 9494 Schaan (LI)
(72) Erfinder: Sonderegger, Marcel, 9436 Balgach (CH); Szabó, József, 6000 KECSKEMÉT (HU); Grether, Alexander, 6800 Feldkirch (AT); Schlag, Andreas Oliver, 9466 Sennwald (CH); Toldo, Cliff, 9490 Vaduz (LI); Hoop, Matthaeus, 9492 Eschen (LI); Stracke, Jens, 6800 Feldkirch (AT)
(74) Vertreter: Hilti Aktiengesellschaft Corporate Intellectual Property

(57) **Zusammenfassung**

Bohrkrone (20) aufweisend einen Bohrschaft und einen Schneidabschnitt mit einem ersten Bohrsegment (23-1) und einem zweiten Bohrsegment (23-2). Das erste Bohrsegment (23-1) weist eine erste innere Mantelfläche (28-1) mit einem ersten Innenabstand (B₁(ϕ, h)) und das zweite Bohrsegment (23-2) eine zweite innere Mantelfläche (28-2) mit einem zweiten Innenabstand (B₂(ϕ, h)) zur Längsachse (24) des Bohrschaftes auf. Der erste Innenabstand (B₁(ϕ, h)) variiert über den Umfang des ersten Bohrsegmentes (23-1) zwischen einem ersten Maximalwert (B_{max,1}) und einem ersten Minimalwert (B_{min,1}) und weist genau einen ersten absoluten Minimalwert (B_{min,1}) auf. Der zweite Innenabstand (B₂(ϕ, h)) ist über den Umfang des zweiten Bohrsegmentes (23-2) grösser gleich dem ersten absoluten Minimalwert (B_{min,1}).

## Beschreibung

### Technisches Gebiet

Die vorliegende Erfindung betrifft eine Bohrkrone gemäß dem Oberbegriff des Anspruchs 1.

### Stand der Technik

Bei Diamantwerkzeugen, die als Bohrkronen zum Kernbohren ausgebildet sind, wird zwischen Ringbohrkronen mit einem geschlossenen Ringsegment und segmentierten Bohrkronen mit mehreren Bohrsegmenten unterschieden.

Segmentierte Bohrkronen umfassen einen Bohrschaft mit einem Einsteckende und einen Schneidabschnitt mit mehreren Bohrsegmenten. Die Bohrkronen werden über das Einsteckende in der Werkzeugaufnahme eines Kernbohrgerätes befestigt und im Bohrbetrieb vom Kernbohrgerät um eine Drehachse angetrieben, die koaxial zur Längsachse des Bohrschaftes verläuft. Der Bohrschaft weist einen Zylinder mit einer Zylinderachse auf, die die Längsachse des Bohrschaftes definiert. Die Bohrsegmente weisen eine äußere Mantelfläche und eine innere Mantelfläche auf, wobei die innere Mantelfläche als Abschnitt eines Zylinders ausgebildet ist und in einer Ebene senkrecht zur Längsachse einen konstanten Innenabstand zur Längsachse aufweist.

Beim Bohren eines Untergrundes, z.B. einer Mauer, einer Betonwand oder einer Betondecke, entsteht im Inneren der Bohrkrone ein Bohrkern, der nach dem Bohren aus der Bohrkrone entfernt werden muss, wobei es zu Problemen kommen kann und der Bohrkern sich im Inneren verklemmt. Besondere Probleme bereiten Bruchstücke, die aus dem Bohrkern herausbrechen und sich zwischen Bohrkrone und Bohrkern verklemmen können.

Segmentierte Bohrkronen werden unterschieden in Bohrkronen mit einem austauschbaren Schneidabschnitt, der lösbar mit dem Bohrschaft verbunden ist, und Bohrkronen mit festem Schneidabschnitt. Bohrkronen mit austauschbarem Schneidabschnitt weisen eine einfachere Entfernung des Bohrkerns auf als Bohrkronen mit festem Schneidabschnitt, da der Schneidabschnitt zum Entfernen des Bohrkerns abgenommen werden kann.

### Darstellung der Erfindung

Die Aufgabe der vorliegenden Erfindung besteht darin, eine Bohrkrone mit zwei Bohrsegmenten zu entwickeln, bei der das Risiko von klemmenden Bohrkernen auch für kleine Bohrkronendurchmesser reduziert ist. Zusätzlich soll das Entfernen eines klemmenden Bohrkerns vereinfacht werden.

Diese Aufgabe wird bei der eingangs genannten Bohrkrone erfindungsgemäß durch die Merkmale des unabhängigen Anspruchs 1 gelöst. Vorteilhafte Weiterbildungen sind in den abhängigen Ansprüchen angegeben.

Erfindungsgemäß ist die Bohrkrone dadurch gekennzeichnet, dass der erste Innenabstand über den Umfang des ersten Bohrsegmentes zwischen einem ersten Maximalwert und einem ersten Minimalwert variiert und über den Umfang des ersten Bohrsegmentes genau einen ersten absoluten Minimalwert aufweist und der zweite Innenabstand über den Umfang des zweiten Bohrsegmentes grösser gleich dem ersten absoluten Minimalwert ist.

Die erfindungsgemäße Bohrkrone umfasst ein erstes Bohrsegment mit einer ersten inneren Mantelfläche, die einen ersten Innenabstand zur Längsachse aufweist, und ein zweites Bohrsegment, das einen zweiten Innenabstand zur Längsachse aufweist, wobei der erste Innenabstand zwischen einem ersten Maximal- und Minimalwert variiert und der zweite Innenabstand über den Umfang des zweiten Bohrsegmentes grösser gleich dem ersten absoluten Minimalwert ist. Dadurch, dass das erste Bohrsegment über den Umfang genau einen ersten absoluten Minimalwert aufweist, ist die Kontaktfläche zwischen dem ersten Bohrsegment und dem Bohrkern auf den Bereich des ersten absoluten Minimalwertes beschränkt.

Bevorzugt weist der erste Innenabstand über den Umfang des ersten Bohrsegmentes zwei erste Maximalwerte auf, wobei der erste absolute Minimalwert in der Umfangsrichtung zwischen den ersten Maximalwerten angeordnet ist. Die Verteilung der ersten Maximalwerte und des ersten absoluten Minimalwertes über den Umfang des ersten Bohrsegmentes ermöglicht die Herstellung eines ersten Bohrsegmentes mit einer geringen Kontaktfläche zum Bohrkern. Das erste Bohrsegment kann lediglich im Bereich des ersten absoluten Minimalwertes in Kontakt mit dem Bohrkern stehen, alle übrigen Bereiche der ersten inneren Mantelfläche weisen einen Spalt zum Bohrkern auf.

Bevorzugt beschreibt der erste Innenabstand über den Umfang des ersten Bohrsegmentes eine erste mathematische Funktion, die im Bereich des ersten absoluten Minimalwertes streng monoton verlaufend ist. Durch den streng monotonen Verlauf des ersten Innenabstandes im Bereich des ersten absoluten Minimalwertes werden die Kontaktfläche zum Bohrkern und damit die Bereiche, in denen der Bohrkern klemmen kann, verringert. Der erste absolute Minimalwert bestimmt den Durchmesser des Bohrkerns, der dem doppelten des ersten absoluten Minimalwertes entspricht.

In einer Weiterentwicklung der Bohrkrone variiert der zweite Innenabstand zwischen einem zweiten Maximalwert und einem zweiten Minimalwert und weist über den Umfang des zweiten Bohrsegmentes genau einen zweiten absoluten Minimalwert auf. Dadurch, dass das zweite Bohrsegment über den Umfang genau einen zweiten absoluten Minimalwert aufweist, ist die Kontaktfläche zwischen dem zweiten Bohrsegment und dem Bohrkern auf den Bereich des zweiten absoluten Minimalwertes beschränkt. Das zweite Bohrsegment weist nur dann eine Kontaktfläche zum Bohrkern auf, wenn der erste absolute Minimalwert und zweite absolute Minimalwert übereinstimmen.

Bevorzugt weist der zweite Innenabstand über den Umfang des zweiten Bohrsegmentes zwei zweite Maximalwerte auf, wobei der zweite absolute Minimalwert in der Umfangsrichtung zwischen den zweiten Maximalwerten angeordnet ist. Die Verteilung der zweiten Maximalwerte und des zweiten absoluten Minimalwertes über den Umfang des zweiten Bohrsegmentes ermöglicht die Herstellung eines zweiten Bohrsegmentes mit einer geringen Kontaktfläche zum Bohrkern. Das zweite Bohrsegment kann lediglich im Bereich des zweiten absoluten Minimalwertes in Kontakt mit dem Bohrkern stehen, alle übrigen Bereiche der zweiten inneren Mantelfläche weisen einen Spalt zum Bohrkern auf.

Bevorzugt beschreibt der zweite Innenabstand über den Umfang des zweiten Bohrsegmentes eine zweite mathematische Funktion, die im Bereich des zweiten absoluten Minimalwertes streng monoton verlaufend ist. Durch den streng monotonen Verlauf des zweiten Innenabstandes im Bereich des zweiten absoluten Minimalwertes werden die Kontaktfläche zum Bohrkern und damit die Bereiche, in denen der Bohrkern klemmen kann, verringert.

Bevorzugt sind der erste absolute Minimalwert des ersten Bohrsegmentes und der zweite absolute Minimalwert des zweiten Bohrsegmentes identisch und in der Umfangsrichtung um ca. 180° zueinander versetzt. Bei einem Versatz von ca. 180° liegen der erste absolute Minimalwert und zweite absolute Minimalwert in der Umfangsrichtung einander gegenüber und können zu einem spiegelsymmetrischen Aufbau der Bohrkrone führen. Durch den spiegelsymmetrischen Aufbau können Vibrationen der Bohrkrone im Bohrbetrieb reduziert und die Laufruhe der Bohrkrone verbessert werden.

In einer ersten Variante sind die erste innere Mantelfläche als Abschnitt eines ersten Zylinders und die zweite innere Mantelfläche als Abschnitt eines zweiten Zylinders ausgebildet. Die Ausbildung der ersten und zweiten inneren Mantelfläche als Abschnitt eines ersten bzw. zweiten Zylinders hat den Vorteil, dass die Abtrageigenschaften des ersten und zweiten Bohrsegmentes über die Höhe konstant sind.

Bevorzugt weist der erste Zylinder eine erste Grundfläche auf, die von einer Kreisform verschieden ist, und/oder der zweite Zylinder weist eine zweite Grundfläche auf, die von einer Kreisform verschieden ist. Die Ausbildung der ersten und/oder zweiten inneren Mantelfläche als Abschnitt eines Zylinders mit einer nicht-kreisförmigen Grundfläche hat den Vorteil, dass die Kontaktfläche zwischen dem Bohrsegment und dem Bohrkern reduziert ist. Besonders bevorzugt weist die erste Grundfläche eine erste Ellipsenform und die zweite Grundfläche eine zweite Ellipsenform auf; die Ellipsenform eignet sich besonders als nicht-kreisförmige Grundfläche.

In einer zweiten Variante sind die erste innere Mantelfläche als Abschnitt eines ersten Innenkonus, der sich in Richtung einer der Unterseite des ersten Bohrsegmentes gegenüberliegenden ersten Oberseite verjüngt, und die zweite innere Mantelfläche als Abschnitt eines zweiten Innenkonus, der sich in Richtung einer der Unterseite des zweiten Bohrsegmentes gegenüberliegenden zweiten Oberseite verjüngt, ausgebildet. Die Ausbildung der ersten und zweiten inneren Mantelfläche als Abschnitt eines Innenkonus hat den Vorteil, dass die Kontaktfläche der Bohrsegmente zum Bohrkern weiter verringert wird. Dadurch, dass sich der Innenkonus in Richtung der Oberseite des Bohrsegmentes verjüngt, kann das Entfernen eines klemmenden Bohrkerns erleichtert werden. Das Risiko, dass der Bohrkern in der Bohrkrone klemmt, ist im Bereich des kleinsten Innenabstandes, d.h. an der Oberseite der Bohrsegmente, am größten. Da die Oberseite der Bohrsegmente für den Bediener zugänglich ist, kann der Bediener den klemmenden Bohrkern entfernen.

Bevorzugt weist der erste Innenkonus eine erste Grundfläche auf, die von einer Kreisform verschieden ist, und/oder der zweite Innenkonus weist eine zweite Grundfläche auf, die von einer Kreisform verschieden ist. Die Ausbildung der ersten und/oder zweiten inneren Mantelfläche als Abschnitt eines Innenkonus mit einer nicht-kreisförmigen Grundfläche hat den Vorteil, dass die Kontaktfläche zwischen dem Bohrsegment und dem Bohrkern auf ein Minimum reduziert werden kann. Besonders bevorzugt weist die erste Grundfläche eine erste Ellipsenform und die zweite Grundfläche eine zweite Ellipsenform auf; die Ellipsenform eignet sich besonders als nicht-kreisförmige Grundfläche.

Bevorzugt sind das erste Bohrsegment und das zweite Bohrsegment identisch ausgebildet. Eine Bohrkrone mit zwei im Rahmen der Fertigungsgenauigkeiten identischen Bohrsegmenten besitzt gleichmäßige Abtrageigenschaften. Der erste absolute Minimalwert und zweite absolute Minimalwert liegen in der Umfangsrichtung einander gegenüber und führen zu einem spiegelsymmetrischen Aufbau der Bohrkrone. Durch den spiegelsymmetrischen Aufbau können Vibrationen der Bohrkrone im Bohrbetrieb reduziert und die Laufruhe der Bohrkrone verbessert werden.

In einer dritten Variante sind die erste innere Mantelfläche als Abschnitt eines ersten Innenkonus, der sich in Richtung einer der Unterseite des ersten Bohrsegmentes gegenüberliegenden ersten Oberseite verjüngt, und die zweite innere Mantelfläche als Abschnitt eines zweiten Zylinders ausgebildet. Die Kombination eines ersten Bohrsegmentes mit einer konusförmigen ersten inneren Mantelfläche und eines zweiten Bohrsegmentes mit einer zylinderförmigen zweiten inneren Mantelfläche hat den Vorteil, dass die Abtrageigenschaften des zweiten Bohrsegmentes über die Höhe konstant sind und beim ersten Bohrsegment die Kontaktfläche zum Bohrkern reduziert ist.

Bevorzugt weist der erste Innenkonus eine erste Grundfläche auf, die von einer Kreisform verschieden ist, und/oder der zweite Zylinder weist eine zweite Grundfläche auf, die von einer Kreisform verschieden ist. Besonders bevorzugt weist die erste Grundfläche eine erste Ellipsenform und die zweite Grundfläche eine zweite Ellipsenform auf; die Ellipsenform eignet sich besonders als nicht-kreisförmige Grundfläche.

### Ausführungsbeispiele

Ausführungsbeispiele der Erfindung werden nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematischer und/oder leicht verzerrter Form ausgeführt. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei gegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Es zeigen:
- FIG. 1: eine Bohrkrone mit einem Bohrschaft und zwei Bohrsegmenten, die am Bohrschaft befestigt sind;
- FIGN. 2A, B: eine erste Ausführungsform einer erfindungsgemäßen Bohrkrone mit einem Bohrschaft und zwei Bohrsegmenten in einer dreidimensionalen Ansicht (FIG. 2A) und in einem Längsschnitt parallel zur Längsachse des Bohrschaftes (FIG. 2B);
- FIGN. 3A, B: die Bohrkrone der FIG. 2A in einer Ansicht auf die Oberseite der Bohrsegmente (FIG. 3A) und die Bohrsegmente in einem Längsschnitt parallel zur Längsachse des Bohrschaftes (FIG. 3B);
- FIGN. 4A, B: eine zweite Ausführungsform einer erfindungsgemäßen Bohrkrone mit einem Bohrschaft und zwei Bohrsegmenten in einer dreidimensionalen Ansicht (FIG. 4A) und in einem Längsschnitt parallel zur Längsachse des Bohrschaftes (FIG. 4B);
- FIGN. 5A, B: die Bohrkrone der FIG. 4A in einer Ansicht auf die Oberseite der Bohrsegmente (FIG. 5A) und die Bohrsegmente in einem Längsschnitt parallel zur Längsachse des Bohrschaftes (FIG. 5B); und
- FIG. 6: eine dritte Ausführungsform einer erfindungsgemäßen Bohrkrone mit einem Bohrschaft und zwei Bohrsegmenten in einer Ansicht auf die Oberseite der Bohrsegmente.

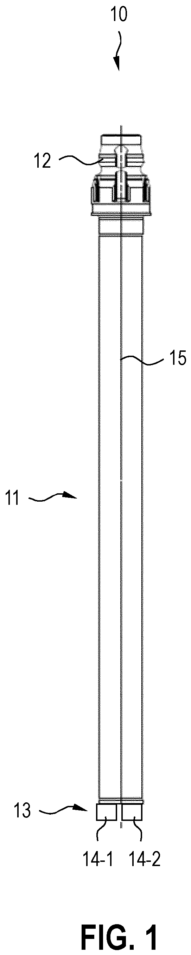

**FIG. 1** zeigt eine Bohrkrone **10,** die einen Bohrschaft **11** mit einem Einsteckende **12** und einen Schneidabschnitt **13** mit einem ersten Bohrsegment **14-1** und einem zweiten Bohrsegment **14-2** aufweist. Die Bohrkrone 10 wird über das Einsteckende 12 in der Werkzeugaufnahme eines Kernbohrgerätes befestigt und im Bohrbetrieb vom Kernbohrgerät um eine Drehachse angetrieben, die koaxial zur Längsachse **15** des Bohrschaftes 11 verläuft.

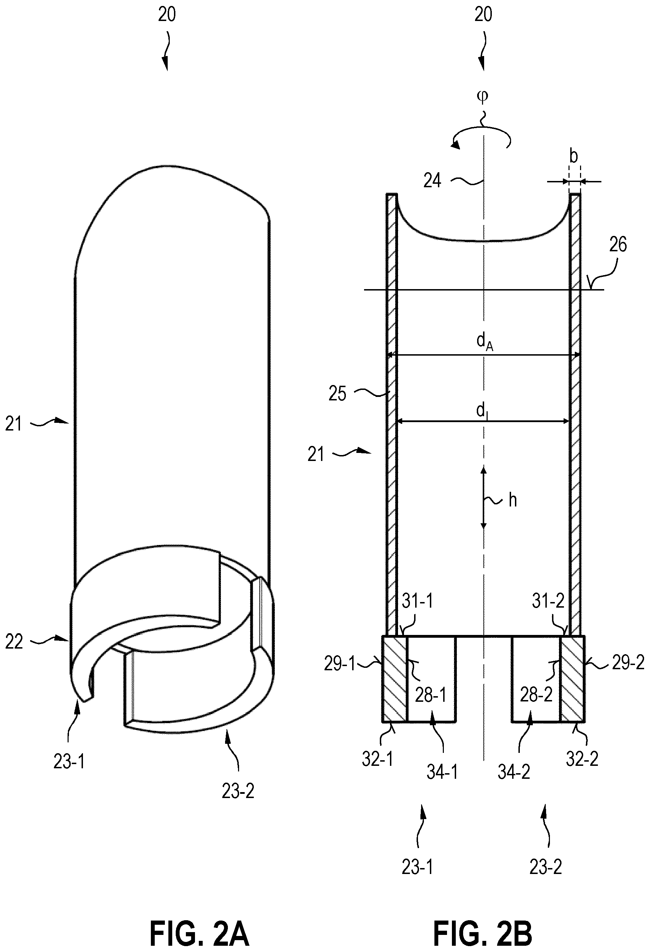

**FIGN. 2A****, B** zeigen eine erste Ausführungsform einer erfindungsgemäßen Bohrkrone **20,** die einen Bohrschaft **21** und einen Schneidabschnitt **22** mit einem ersten Bohrsegment **23-1** und einem zweiten Bohrsegment **23-2** aufweist. Dabei zeigt FIG. 2A die Bohrkrone 20 in einer dreidimensionalen Ansicht und FIG. 2B die Bohrkrone 20 in einem Längsschnitt parallel zur Längsachse **24** des Bohrschaftes 21.

Der Bohrschaft 21 umfasst einen Zylinder **25,** der in einer Ebene **26** senkrecht zur Zylinderachse, die die Längsachse 24 des Bohrschaftes 21 definiert, einen Außendurchmesser **d_{A},** einen Innendurchmesser **di** und eine Schaftbreite **b** aufweist. Im Ausführungsbeispiel sind der Innendurchmesser d_{I}, der Außendurchmesser d_{A} und die Schaftbreite b sowohl in einer Umfangsrichtung ϕ als auch in einer Höhenrichtung **h** konstant. Alternativ können der Innendurchmesser, der Außendurchmesser und/oder die Schaftbreite in der Umfangsrichtung ϕ und/oder der Höhenrichtung h variieren.

Das erste Bohrsegment 23-1 umfasst eine erste innere Mantelfläche **28-1,** eine erste äußere Mantelfläche **29-1,** eine erste Unterseite **31-1** und eine erste Oberseite **32-2** und das zweite Bohrsegment 23-2 umfasst eine zweite innere Mantelfläche **28-2,** eine zweite äußere Mantelfläche **29-2,** eine zweite Unterseite **31-2** und eine zweite Oberseite **32-2.** Dabei werden die erste Unterseite 31-1 des ersten Bohrsegmentes 23-1 und die zweite Unterseite 31-2 des zweiten Bohrsegmentes 23-2 an einer Stirnfläche des Bohrschaftes 21 befestigt.

Die erste innere Mantelfläche 28-1 des ersten Bohrsegmentes 23-1 ist als Abschnitt eines ersten Zylinders **34-1** ausgebildet und die zweite innere Mantelfläche 28-2 des zweiten Bohrsegmentes 23-2 als Abschnitt eines zweiten Zylinders **34-2.** Die Ausbildung der ersten und zweiten inneren Mantelfläche 28-1, 28-2 als Abschnitt eines ersten bzw. zweiten Zylinders 34-1, 34-2 hat den Vorteil, dass die Abtrageigenschaften des ersten und zweiten Bohrsegmentes 23-1, 23-2 über die Höhe konstant sind.

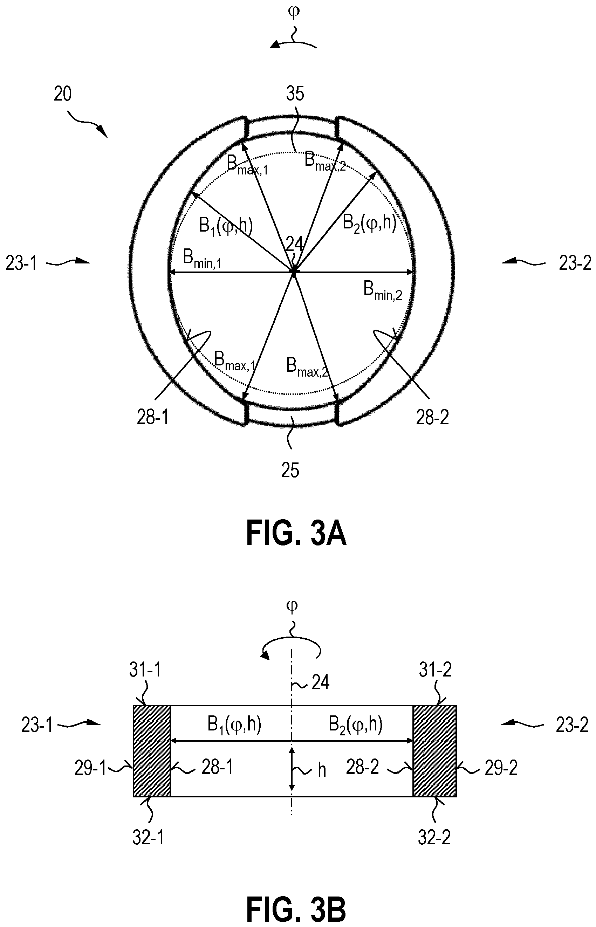

**FIGN. 3A****, B** zeigen die erfindungsgemäße Bohrkrone 20 der FIG. 2A in einer Ansicht auf die Oberseite der Bohrsegmente 23-1, 23-2 (FIG. 3A) und die Bohrsegmente 23-1, 23-2 in einem Längsschnitt parallel zur Längsachse 24 des Bohrschaftes 21 (FIG. 3B).

Die erste innere Mantelfläche 28-1 weist in der Ebene 26 senkrecht zur Längsachse 24 einen ersten Innenabstand **B₁(ϕ, h)** zur Längsachse 24 auf. Dabei definiert der erste Innenabstand B₁(ϕ, h) eine erste mathematische Funktion, die den Verlauf des ersten Innenabstandes über den Umfang und die Höhe des ersten Bohrsegmentes 23-1 beschreibt.

Der erste Innenabstand B₁(ϕ, h) variiert in der Umfangsrichtung ϕ über den Umfang des ersten Bohrsegmentes 23-1 zwischen einem ersten Minimalwert **B_{min,1}** und einem ersten Maximalwert **B_{max,1};** in der Höhenrichtung h ist der erste Innenabstand B₁(ϕ, h) konstant. Der erste Innenabstand B₁(ϕ, h) weist einen weiteren ersten Maximalwert B_{max,1} auf, wobei der erste absolute Minimalwert B_{min,1} in der Umfangsrichtung ϕ zwischen den beiden ersten Maximalwerten angeordnet ist. Der erste Innenabstand B₁(ϕ, h) ist in der Ebene 26 senkrecht zur Längsachse 24 im Bereich des ersten absoluten Minimalwertes B_{min,1} streng monoton verlaufend.

Die Verteilung der ersten Maximalwerte B_{max,1} und des ersten absoluten Minimalwertes B_{min,1} über den Umfang des ersten Bohrsegmentes 23-1 und der streng monotone Verlauf des ersten Innenabstandes B₁(ϕ, h) im Bereich des ersten absoluten Minimalwertes B_{min,1} ermöglichen die Herstellung eines ersten Bohrsegmentes 23-1 mit einer geringen Kontaktfläche zum Bohrkern **35.** Das erste Bohrsegment 23-1 kann lediglich im Bereich des ersten absoluten Minimalwertes B_{min,1} in Kontakt mit dem Bohrkern 35 stehen, alle übrigen Bereiche der ersten inneren Mantelfläche 28-1 weisen einen Spalt zum Bohrkern 35 auf.

Die zweite innere Mantelfläche 28-2 weist in der Ebene 26 senkrecht zur Längsachse 24 einen zweiten Innenabstand **B₂(ϕ, h)** zur Längsachse 24 auf. Dabei definiert der zweite Innenabstand B₂(ϕ, h) eine zweite mathematische Funktion, die den Verlauf des zweiten Innenabstandes über den Umfang und die Höhe des zweiten Bohrsegmentes 23-2 beschreibt.

Der zweite Innenabstand B₂(ϕ, h) variiert in der Umfangsrichtung ϕ über den Umfang des zweiten Bohrsegmentes 23-2 zwischen einem zweiten Minimalwert **B_{min,2}** und einem zweiten Maximalwert **B_{max,2};** in der Höhenrichtung h ist der zweite Innenabstand B₂(ϕ, h) konstant. Der zweite Innenabstand B₂(ϕ, h) weist einen weiteren zweiten Maximalwert B_{max,2} auf, wobei der zweite absolute Minimalwert B_{min,2} in der Umfangsrichtung ϕ zwischen den beiden zweiten Maximalwerten B_{max,2} angeordnet ist. Der zweite Innenabstand B₂(ϕ, h) ist in der Ebene 26 senkrecht zur Längsachse 24 im Bereich des zweiten absoluten Minimalwertes B_{min,2} streng monoton verlaufend.

Die Verteilung der zweiten Maximalwerte B_{max,2} und des zweiten absoluten Minimalwertes B_{min,2} über den Umfang des zweiten Bohrsegmentes 23-2 und der streng monotone Verlauf des zweiten Innenabstandes B₂(ϕ, h) im Bereich des zweiten absoluten Minimalwertes B_{min,2} ermöglichen die Herstellung eines zweiten Bohrsegmentes 23-2 mit einer geringen Kontaktfläche zum Bohrkern 35. Das zweite Bohrsegment 23-2 kann lediglich im Bereich des zweiten absoluten Minimalwertes B_{min,2} in Kontakt mit dem Bohrkern 35 stehen, alle übrigen Bereiche der zweiten inneren Mantelfläche 28-2 weisen einen Spalt zum Bohrkern 35 auf.

Im Ausführungsbeispiel sind das erste Bohrsegment 23-1 und zweite Bohrsegment 23-2 im Rahmen von Fertigungsgenauigkeiten identisch ausgebildet und in der Umfangsrichtung ϕ um ca. 180° zueinander versetzt. Bei einem Versatz von ca. 180° liegen der erste absolute Minimalwert B_{min,1} und zweite absolute Minimalwert B_{min,2} in der Umfangsrichtung ϕ einander gegenüber und führen zu einem spiegelsymmetrischen Aufbau der Bohrkrone 20. Durch den spiegelsymmetrischen Aufbau können Vibrationen der Bohrkrone 20 im Bohrbetrieb reduziert und die Laufruhe der Bohrkrone 20 verbessert werden.

Der erste Zylinder 34-1 weist eine erste Grundfläche auf, die von einer Kreisform verschieden ist und die im Ausführungsbeispiel als erste Ellipsenform ausgebildet ist, und der zweite Zylinder 34-2 weist eine zweite Grundfläche auf, die von einer Kreisform verschieden ist und die im Ausführungsbeispiel als zweite Ellipsenform ausgebildet ist. Das erste Bohrsegment 23-1 und zweite Bohrsegment 23-2 sind so angeordnet, dass der erste absolute Minimalwert B_{min,1} des ersten Bohrsegmentes 23-1 und der zweite absolute Minimalwert B_{min,2} des zweiten Bohrsegmentes 23-2 die kurze Halbachse der Ellipsenform bilden.

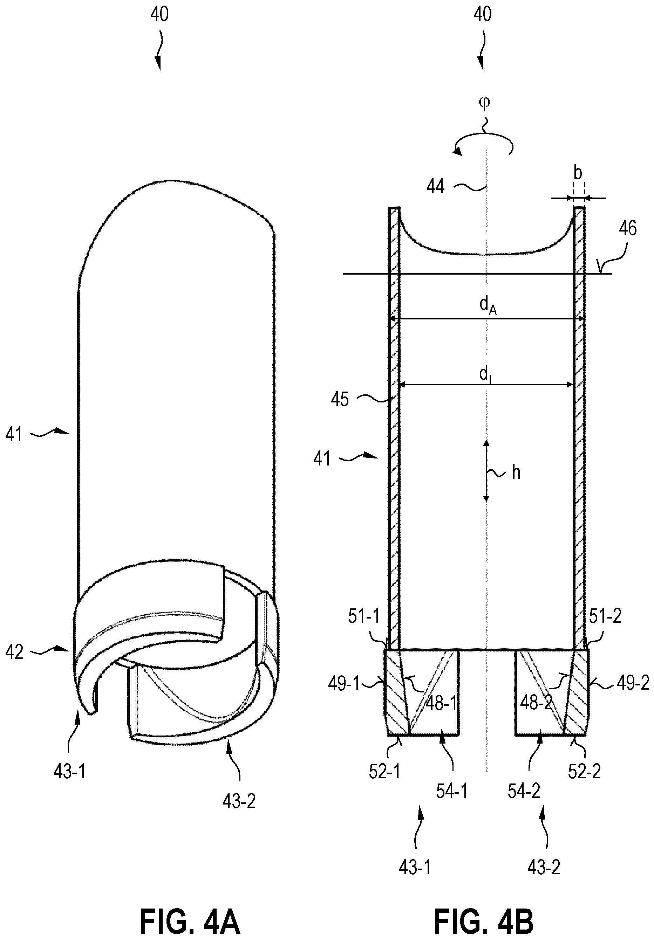

**FIGN. 4A****, B** zeigen eine zweite Ausführungsform einer erfindungsgemäßen Bohrkrone **40,** die einen Bohrschaft **41** und einen Schneidabschnitt **42** mit einem ersten Bohrsegment **43-1** und einem zweiten Bohrsegment **43-2** aufweist. Dabei zeigt FIG. 4A die Bohrkrone 40 in einer dreidimensionalen Ansicht und FIG. 4B die Bohrkrone 40 in einem Längsschnitt parallel zur Längsachse **44** des Bohrschaftes 41.

Der Bohrschaft 41 umfasst einen Zylinder **45,** der in einer Ebene **46** senkrecht zur Zylinderachse, die die Längsachse 44 des Bohrschaftes 41 definiert, einen Außendurchmesser **d_{A},** einen Innendurchmesser **di** und eine Schaftbreite **b** aufweist. Im Ausführungsbeispiel sind der Innendurchmesser d_{I}, der Außendurchmesser d_{A} und die Schaftbreite b sowohl in der Umfangsrichtung ϕ als auch in der Höhenrichtung h konstant. Alternativ können der Innendurchmesser, der Außendurchmesser und/oder die Schaftbreite in der Umfangsrichtung ϕ und/oder der Höhenrichtung h variieren.

Das erste Bohrsegment 43-1 umfasst eine erste innere Mantelfläche **48-1,** eine erste äußere Mantelfläche **49-1,** eine erste Unterseite **51-1** und eine erste Oberseite **52-1** und das zweite Bohrsegment 43-2 umfasst eine zweite innere Mantelfläche **48-2,** eine zweite äußere Mantelfläche **49-2,** eine zweite Unterseite **51-2** und eine zweite Oberseite **52-2.** Dabei werden die erste Unterseite 51-1 des ersten Bohrsegmentes 43-1 und die zweite Unterseite 51-2 des zweiten Bohrsegmentes 43-2 an einer Stirnfläche des Bohrschaftes 41 befestigt.

Die erste innere Mantelfläche 48-1 des ersten Bohrsegmentes 43-1 ist als Abschnitt eines ersten Innenkonus **54-1,** der sich in Richtung der ersten Oberseite 52-1 des ersten Bohrsegmentes 43-1 verjüngt, ausgebildet und die zweite innere Mantelfläche 48-2 des zweiten Bohrsegmentes 43-2 als Abschnitt eines zweiten Innenkonus **54-2,** der sich in Richtung der zweiten Oberseite 52-2 des zweiten Bohrsegmentes 43-2 verjüngt.

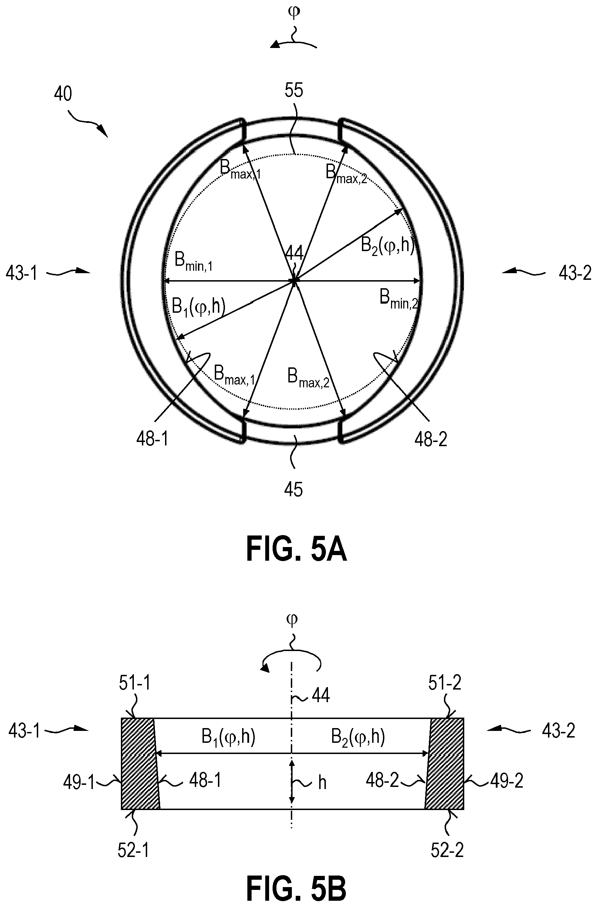

**FIGN. 5A****, B** zeigen die erfindungsgemäße Bohrkrone 40 der FIG. 4A in einer Ansicht auf die Oberseite der Bohrsegmente 43-1, 43-2 (FIG. 5A) und die Bohrsegmente 43-1, 43-2 in einem Längsschnitt parallel zur Längsachse 44 des Bohrschaftes 41 (FIG. 5B).

Die erste innere Mantelfläche 48-1 weist in der Ebene 46 senkrecht zur Längsachse 44 einen ersten Innenabstand **B₁(ϕ, h)** zur Längsachse 44 auf. Dabei definiert der erste Innenabstand B₁(ϕ, h) eine erste mathematische Funktion, die den Verlauf des ersten Innenabstandes über den Umfang und die Höhe des ersten Bohrsegmentes 43-1 beschreibt.

Der erste Innenabstand B₁(ϕ, h) variiert in der Umfangsrichtung ϕ über den Umfang des ersten Bohrsegmentes 43-1 zwischen einem ersten Minimalwert **B_{min,1}** und einem ersten Maximalwert **B_{max,1};** in der Höhenrichtung h variiert der erste Innenabstand B₁(ϕ, h) und nimmt in Richtung der ersten Oberseite 52-1 des ersten Bohrsegmentes 43-1 ab. Der erste Innenabstand B₁(ϕ, h) weist einen weiteren ersten Maximalwert B_{max,1} auf, wobei der erste absolute Minimalwert B_{min,1} in der Umfangsrichtung ϕ zwischen den beiden ersten Maximalwerten angeordnet ist. Der erste Innenabstand B₁(ϕ, h) ist in der Ebene 46 senkrecht zur Längsachse 44 im Bereich des ersten absoluten Minimalwertes B_{min,1} streng monoton verlaufend.

Die Verteilung der ersten Maximalwerte B_{max,1} und des ersten absoluten Minimalwertes B_{min,1} über den Umfang des ersten Bohrsegmentes 43-1, der streng monotone Verlauf des ersten Innenabstandes B₁(ϕ, h) im Bereich des ersten absoluten Minimalwertes B_{min,1} und die Variation des ersten Innenabstandes B₁(ϕ, h) in der Höhenrichtung h ermöglichen die Herstellung eines ersten Bohrsegmentes 43-1 mit einer geringen Kontaktfläche zum Bohrkern **55.** Das erste Bohrsegment 43-1 kann lediglich im Bereich des ersten absoluten Minimalwertes B_{min,1} in Kontakt mit dem Bohrkern 55 stehen, alle übrigen Bereiche der ersten inneren Mantelfläche 48-1 weisen einen Spalt zum Bohrkern 55 auf.

Die zweite innere Mantelfläche 48-2 weist in der Ebene 46 senkrecht zur Längsachse 44 einen zweiten Innenabstand **B₂(ϕ, h)** zur Längsachse 44 auf. Dabei definiert der zweite Innenabstand B₂(ϕ, h) eine zweite mathematische Funktion, die den Verlauf des zweiten Innenabstandes über den Umfang und die Höhe des zweiten Bohrsegmentes 43-2 beschreibt.

Der zweite Innenabstand B₂(ϕ, h) variiert in der Umfangsrichtung ϕ über den Umfang des zweiten Bohrsegmentes 43-2 zwischen einem zweiten Minimalwert **B_{min,2}** und einem zweiten Maximalwert **B_{max,2};** in der Höhenrichtung h variiert der zweite Innenabstand B₂(ϕ, h) und nimmt in Richtung der zweiten Oberseite 52-2 des zweiten Bohrsegmentes 43-2 ab. Der zweite Innenabstand B₂(ϕ, h) weist einen weiteren zweiten Maximalwert B_{max,2} auf, wobei der zweite absolute Minimalwert B_{min,2} in der Umfangsrichtung ϕ zwischen den beiden zweiten Maximalwerten angeordnet ist. Der zweite Innenabstand B₂(ϕ, h) ist in der Ebene 46 senkrecht zur Längsachse 44 im Bereich des zweiten absoluten Minimalwertes B_{min,2} streng monoton verlaufend.

Die Verteilung der zweiten Maximalwerte B_{max,2} und des zweiten absoluten Minimalwertes B_{min,2} über den Umfang des zweiten Bohrsegmentes 43-2, der streng monotone Verlauf des zweiten Innenabstandes B₂(ϕ, h) im Bereich des zweiten absoluten Minimalwertes B_{min,2} und die Variation des zweiten Innenabstandes B₂(ϕ, h) in der Höhenrichtung h ermöglichen die Herstellung eines zweiten Bohrsegmentes 43-2 mit einer geringen Kontaktfläche zum Bohrkern 55. Das zweite Bohrsegment 43-2 kann lediglich im Bereich des zweiten absoluten Minimalwertes B_{min,2} in Kontakt mit dem Bohrkern 55 stehen, alle übrigen Bereiche der zweiten inneren Mantelfläche 48-2 weisen einen Spalt zum Bohrkern 55 auf.

Im Ausführungsbeispiel sind das erste Bohrsegment 43-1 und zweite Bohrsegment 43-2 im Rahmen von Fertigungsgenauigkeiten identisch ausgebildet und in der Umfangsrichtung ϕ um ca. 180° zueinander versetzt. Bei einem Versatz von ca. 180° liegen der erste absolute Minimalwert B_{min,1} und zweite absolute Minimalwert B_{min,2} in der Umfangsrichtung ϕ einander gegenüber und führen zu einem spiegelsymmetrischen Aufbau der Bohrkrone 40. Durch den spiegelsymmetrischen Aufbau können Vibrationen der Bohrkrone 40 im Bohrbetrieb reduziert und die Laufruhe der Bohrkrone 40 verbessert werden.

Der erste Innenkonus 54-1 weist eine erste Grundfläche auf, die von einer Kreisform verschieden ist und die im Ausführungsbeispiel als erste Ellipsenform ausgebildet ist, und der zweite Innenkonus 54-2 weist eine zweite Grundfläche auf, die von einer Kreisform verschieden ist und die im Ausführungsbeispiel als zweite Ellipsenform ausgebildet ist. Das erste Bohrsegment 43-1 und zweite Bohrsegment 43-2 sind so angeordnet, dass der erste absolute Minimalwert B_{min,1} des ersten Bohrsegmentes 43-1 und der zweite absolute Minimalwert B_{min,2} des zweiten Bohrsegmentes 43-2 die kurze Halbachse der Ellipsenform bilden.

Die Bohrkrone 20 der FIG. 2A umfasst ein erstes und zweites Bohrsegment 23-1, 23-2 mit inneren Mantelflächen 28-1, 28-2, die als Abschnitt eines ersten Zylinders 34-1 bzw. zweiten Zylinders 34-2 ausgebildet sind, und die Bohrkrone 40 der FIG. 4A umfasst ein erstes und zweites Bohrsegment 43-1, 43-2 mit inneren Mantelflächen 48-1, 48-2, die als Abschnitt eines ersten Innenkonus 54-1 bzw. zweiten Innenkonus 54-2 ausgebildet sind. Alternativ kann eine erfindungsgemäße Bohrkrone ein erstes Bohrsegment mit einer inneren Mantelfläche, die als Abschnitt eines Innenkonus ausgebildet ist, und ein zweites Bohrsegment mit einer inneren Mantelfläche, die als Abschnitt eines Zylinders ausgebildet ist, aufweisen. Dazu wird bei der Bohrkrone 20 der FIG. 2A das erste Bohrsegment 23-1 durch das erste Bohrsegment 43-1 der Bohrkrone 40 der FIG. 4A ersetzt oder bei der Bohrkrone 40 der FIG. 4A wird das zweite Bohrsegment 43-2 durch das zweite Bohrsegment 23-2 der Bohrkrone 20 der FIG. 2A ersetzt.

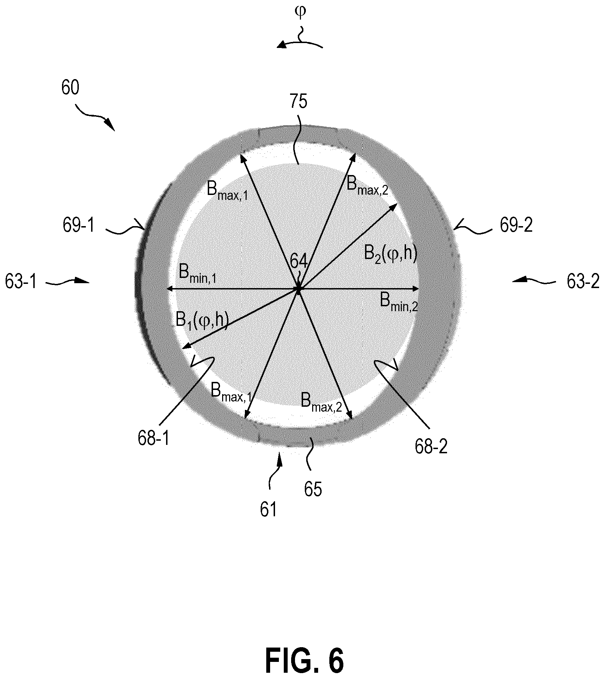

**FIG. 6** zeigt eine dritte Ausführungsform einer erfindungsgemäßen Bohrkrone **60,** die einen Bohrschaft **61** und einen Schneidabschnitt mit einem ersten Bohrsegment **63-1** und einem zweiten Bohrsegment **63-2** aufweist, in einer Ansicht auf die Oberseite der Bohrsegmente 63-1, 63-2.

Das erste Bohrsegment 63-1 ist identisch zum ersten Bohrsegment 23-1 der Bohrkrone 20 oder zum ersten Bohrsegment 43-1 der Bohrkrone 40 ausgebildet. Die Bohrkrone 60 unterscheidet sich von der Bohrkrone 20 der FIG. 2A und der Bohrkrone 40 der FIG. 4A dadurch, dass das erste Bohrsegment 63-1 und zweite Bohrsegment 63-2 unterschiedlich ausgebildet sind. Der Bohrschaft 61 ist analog zum Bohrschaft 21 der Bohrkrone 20 und zum Bohrschaft 41 der Bohrkrone 40 aufgebaut. Der Bohrschaft 61 umfasst einen Zylinder mit einer Zylinderachse, die eine Längsachse **64** des Bohrschaftes 61 definiert.

Das erste Bohrsegment 63-1 umfasst eine erste innere Mantelfläche **68-1,** eine erste äußere Mantelfläche **69-1,** eine erste Unterseite und eine erste Oberseite und das zweite Bohrsegment 63-2 umfasst eine zweite innere Mantelfläche **68-2,** eine zweite äußere Mantelfläche **69-2,** eine zweite Unterseite und eine zweite Oberseite. Dabei werden die erste Unterseite des ersten Bohrsegmentes 63-1 und die zweite Unterseite des zweiten Bohrsegmentes 63-2 am Bohrschaft 61 befestigt.

Die erste innere Mantelfläche 68-1 weist senkrecht zur Längsachse 64 des Bohrschaftes 61 einen ersten Innenabstand **B₁(ϕ, h)** zur Längsachse 64 auf. Dabei definiert der erste Innenabstand B₁(ϕ, h) eine erste mathematische Funktion, die den Verlauf des ersten Innenabstandes über den Umfang und die Höhe des ersten Bohrsegmentes 63-1 beschreibt.

Der erste Innenabstand B₁(ϕ, h) variiert über den Umfang des ersten Bohrsegmentes 63-1 zwischen einem ersten Minimalwert **B_{min,1}** und einem ersten Maximalwert **B_{max,1}.** Der erste Innenabstand B₁(ϕ, h) weist einen weiteren ersten Maximalwert B_{max,1} auf, wobei der erste absolute Minimalwert B_{min,1} in der Umfangsrichtung ϕ zwischen den beiden ersten Maximalwerten angeordnet ist. Der erste Innenabstand B₁(ϕ, h) ist in der Ebene senkrecht zur Längsachse 64 im Bereich des ersten absoluten Minimalwertes B_{min,1} streng monoton verlaufend.

Die erste innere Mantelfläche 68-1 kann wie die erste innere Mantelfläche 28-1 als Abschnitt eines ersten Zylinders oder wie die erste innere Mantelfläche 48-1 als Abschnitt eines ersten Innenkonus, der sich in Richtung der ersten Oberseite des ersten Bohrsegmentes 63-1 verjüngt, ausgebildet sein.

Die zweite innere Mantelfläche 68-2 weist senkrecht zur Längsachse 64 des Bohrschaftes 61 einen zweiten Innenabstand **B₂(ϕ, h)** zur Längsachse 64 auf. Dabei definiert der zweite Innenabstand B₂(ϕ, h) eine zweite mathematische Funktion, die den Verlauf des zweiten Innenabstandes über den Umfang und die Höhe des zweiten Bohrsegmentes 63-2 beschreibt.

Der zweite Innenabstand B₂(ϕ, h) variiert über den Umfang des zweiten Bohrsegmentes 63-2 zwischen einem zweiten Minimalwert **B_{min,2}** und einem zweiten Maximalwert **B_{max,2}.** Der zweite Innenabstand B₂(ϕ, h) weist einen weiteren zweiten Maximalwert B_{max,2} auf, wobei der zweite absolute Minimalwert B_{min,2} in der Umfangsrichtung ϕ zwischen den beiden zweiten Maximalwerten angeordnet ist. Der zweite Innenabstand B₂(ϕ, h) ist in der Ebene senkrecht zur Längsachse 64 im Bereich des zweiten absoluten Minimalwertes B_{min,2} streng monoton verlaufend.

Die zweite innere Mantelfläche 68-2 kann wie die zweite innere Mantelfläche 28-2 als Abschnitt eines zweiten Zylinders oder wie die zweite innere Mantelfläche 48-2 als Abschnitt eines zweiten Innenkonus, der sich in Richtung der zweiten Oberseite des zweiten Bohrsegmentes 63-2 verjüngt, ausgebildet sein.

Im Ausführungsbeispiel der FIG. 6 unterscheidet sich das zweite Bohrsegment 63-2 vom ersten Bohrsegment 63-1 dadurch, dass der erste absolute Minimalwert B_{min,1} kleiner als der zweite absolute Minimalwert B_{min,2} ist. Dies führt dazu, dass das zweite Bohrsegment 63-2 keine Kontaktfläche zum Bohrkern 75 aufweist. Die Kontaktfläche zwischen den Bohrsegmenten 63-1, 63-2 und dem Bohrkern 75 ist auf den Bereich des ersten absoluten Minimalwertes B_{min,1} beschränkt.

## Patentansprüche

1. Bohrkrone (20; 40; 60), aufweisend:
▪ einen Bohrschaft (21; 41; 61), der einen Zylinder (25; 45; 65) mit einer Längsachse (24; 44; 64) aufweist, wobei der Zylinder (25; 45; 65) in einer Ebene (26; 46) senkrecht zur Längsachse (24; 44; 64) einen Außendurchmesser (d_{A}), einen Innendurchmesser (d_{I}) und eine Schaftbreite (b) aufweist, und
▪ zwei Bohrsegmente (23-1, 23-2; 43-1, 43-2; 63-1, 63-2), die in einer Umfangsrichtung (ϕ) voneinander beabstandet und mit einer Unterseite (31-1, 31-2; 51-1, 51-2) am Bohrschaft (21; 41; 61) befestigt sind, wobei die zwei Bohrsegmente (23-1, 23-2; 43-1, 43-2; 63-1, 63-2) ein erstes Bohrsegment (23-1; 43-1; 63-1) mit einer ersten inneren Mantelfläche (28-1; 48-1; 68-1), die senkrecht zur Längsachse (24; 44; 66) einen ersten Innenabstand (B₁(ϕ, h)) zur Längsachse (24; 44; 64) aufweist, und ein zweites Bohrsegment (23-2; 43-2; 63-2) mit einer zweiten inneren Mantelfläche (28-2; 48-2; 68-2), die senkrecht zur Längsachse (24; 44; 64) einen zweiten Innenabstand (B₂(ϕ, h)) zur Längsachse (24; 44; 64) aufweist, umfassen,
**dadurch gekennzeichnet, dass** der erste Innenabstand (B₁(ϕ, h)) über den Umfang des ersten Bohrsegmentes (23-1; 43-1; 63-1) zwischen einem ersten Maximalwert (B_{max,1}) und einem ersten Minimalwert (B_{min,1}) variiert und über den Umfang des ersten Bohrsegmentes (23-1; 43-1; 63-1) genau einen ersten absoluten Minimalwert (B_{min,1}) aufweist und
der zweite Innenabstand (B₂(ϕ, h)) über den Umfang des zweiten Bohrsegmentes (23-2; 43-2; 63-2) grösser gleich dem ersten absoluten Minimalwert (B_{min,1}) ist.

2. Bohrkrone nach Anspruch 1, **dadurch gekennzeichnet, dass** der erste Innenabstand (B₁(ϕ, h)) über den Umfang des ersten Bohrsegmentes (23-1; 43-1; 63-1) zwei erste Maximalwerte (B_{max,1}) aufweist, wobei der erste absolute Minimalwert (B_{min,1}) in der Umfangsrichtung (ϕ) zwischen den ersten Maximalwerten (B_{max,1}) angeordnet ist.

3. Bohrkrone nach einem der Ansprüche 1 bis 2, **dadurch gekennzeichnet, dass** der erste Innenabstand (B₁(ϕ, h)) über den Umfang des ersten Bohrsegmentes (23-1; 43-1; 63-1) eine erste mathematische Funktion beschreibt, die im Bereich des ersten absoluten Minimalwertes (B_{min,1}) streng monoton verlaufend ist.

4. Bohrkrone nach einem der Ansprüche 1 bis 3, **dadurch gekennzeichnet, dass** der zweite Innenabstand (B₂(ϕ, h)) zwischen einem zweiten Maximalwert (B_{max,2}) und einem zweiten Minimalwert (B_{min,2}) variiert und über den Umfang des zweiten Bohrsegmentes (23-2; 43-2; 63-2) genau einen zweiten absoluten Minimalwert (B_{min,2}) aufweist.

5. Bohrkrone nach Anspruch 4, **dadurch gekennzeichnet, dass** der zweite Innenabstand (B₂(ϕ, h)) über den Umfang des zweiten Bohrsegmentes (23-2; 43-2; 63-2) zwei zweite Maximalwerte (B_{max,2}) aufweist, wobei der zweite absolute Minimalwert (B_{min,2}) in der Umfangsrichtung (ϕ) zwischen den zweiten Maximalwerten (B_{max,2}) angeordnet ist.

6. Bohrkrone nach einem der Ansprüche 4 bis 5, **dadurch gekennzeichnet, dass** der zweite Innenabstand (B₂(ϕ, h)) über den Umfang des zweiten Bohrsegmentes (23-2; 43-2; 63-2) eine zweite mathematische Funktion beschreibt, die im Bereich des zweiten absoluten Minimalwertes (B_{min,2}) streng monoton verlaufend ist.

7. Bohrkrone nach einem der Ansprüche 4 bis 6, **dadurch gekennzeichnet, dass** der erste absolute Minimalwert (B_{min,1}) des ersten Bohrsegmentes (23-1; 43-1; 63-1) und der zweite absolute Minimalwert (B_{min,2}) des zweiten Bohrsegmentes (23-2; 43-2; 63-2) in der Umfangsrichtung (ϕ) um ca. 180° zueinander versetzt sind.

8. Bohrkrone nach einem der Ansprüche 1 bis 7, **dadurch gekennzeichnet, dass** die erste innere Mantelfläche (28-1) als Abschnitt eines ersten Zylinders (34-1) und die zweite innere Mantelfläche (28-2) als Abschnitt eines zweiten Zylinders (34-2) ausgebildet ist.

9. Bohrkrone nach Anspruch 8, **dadurch gekennzeichnet, dass** der erste Zylinder (34-1) eine erste Grundfläche aufweist, die von einer Kreisform verschieden ist, und/oder der zweite Zylinder (34-2) eine zweite Grundfläche aufweist, die von einer Kreisform verschieden ist.

10. Bohrkrone nach einem der Ansprüche 1 bis 7, **dadurch gekennzeichnet, dass** die erste innere Mantelfläche (48-1) als Abschnitt eines ersten Innenkonus (54-1), der sich in Richtung einer der Unterseite (51-1) des ersten Bohrsegmentes (43-1) gegenüberliegenden ersten Oberseite (52-1) verjüngt, und die zweite innere Mantelfläche (48-2) als Abschnitt eines zweiten Innenkonus (54-2), der sich in Richtung einer der Unterseite (51-2) des zweiten Bohrsegmentes (43-2) gegenüberliegenden zweiten Oberseite (52-2) verjüngt, ausgebildet ist.

11. Bohrkrone nach Anspruch 10, **dadurch gekennzeichnet, dass** der erste Innenkonus (54-1) eine erste Grundfläche aufweist, die von einer Kreisform verschieden ist, und/oder der zweite Innenkonus (54-2) eine zweite Grundfläche aufweist, die von einer Kreisform verschieden ist.

12. Bohrkrone nach einem der Ansprüche 8 bis 11, **dadurch gekennzeichnet, dass** das erste Bohrsegment (23-1; 43-1) und das zweite Bohrsegment (23-2; 43-2) identisch ausgebildet sind.

13. Bohrkrone nach einem der Ansprüche 1 bis 7, **dadurch gekennzeichnet, dass** die erste innere Mantelfläche (48-1) als Abschnitt eines ersten Innenkonus (54-1), der sich in Richtung einer der Unterseite (51-1) des ersten Bohrsegmentes (43-1) gegenüberliegenden ersten Oberseite (52-1) verjüngt, und die zweite innere Mantelfläche (28-2) als Abschnitt eines zweiten Zylinders (34-2) ausgebildet ist.

14. Bohrkrone nach Anspruch 13, **dadurch gekennzeichnet, dass** der erste Innenkonus (54-1) eine erste Grundfläche aufweist, die von einer Kreisform verschieden ist, und/oder der zweite Zylinder (34-2) eine zweite Grundfläche aufweist, die von einer Kreisform verschieden ist.
